# EUROPÄISCHE PATENTANMELDUNG

(11) **EP 1 467 106 A1**
(43) Veröffentlichungstag der Anmeldung: **13.10.2004**
(21) Anmeldenummer: 04008552.4
(22) Anmeldetag: 08.04.2004
(51) Int. Cl.: F16B 13/06, F16B 5/02

(54) **Befestigungsvorrichtung zur Befestigung eines Beschlagteiles**

(30) Priorität: 10.04.2003 DE 10316326
(71) Anmelder: Horst Filipp GmbH, 32130 Enger-Oldinghausen (DE)
(72) Erfinder: Filipp, Horst, 33790 Halle (DE)
(74) Vertreter: Specht, Peter, Dipl.-Phys.

(57) **Zusammenfassung**

Eine Befestigungsvorrichtung zur Befestigung eines zumindest endseitig rohrförmigen Beschlagteiles (7), vorzugsweise eines Griffes, an einem Bauteil (8), insbesondere einer Tür oder einem Fenster mit einer in Funktionsstellung an der Innenwandung des Beschlagteiles (7) reibschlüssig anliegenden, mit mindestens einer mit einem Längsschlitz (5, 10) versehenen Spreizhülse (1), in der ein Spreizkonus (3) geführt ist, der zur Spreizung der Spreizhülse (1) mittels einer Schraube (4) in der Spreizhülse (1) axial bewegbar ist, ist derart gestaltet, dass der zumindest eine Längsschlitz (10) sich über die gesamte Länge der Spreizhülse (1) sowie von einer Innenbohrung (12) bzw. der Anlagefläche (9) zur Außenseite hin erstreckt.

## Beschreibung

Die vorliegende Erfindung betrifft eine Befestigungsvorrichtung zur Befestigung eines Beschlagteiles gemäß dem Oberbegriff des Anspruches 1.

Mit Hilfe derartiger Befestigungsvorrichtungen werden Beschlagteile in vielfältiger Ausführung und Funktion ortsfest angebracht. Dabei dienen die Beschlagteile beispielsweise als Türgriffe, insbesondere im gewerblichen Bereich, als Handläufe allgemeiner Art oder dergleichen.

Insbesondere bei Verwendung im gewerblichen Bereich unterliegen die Beschlagteile einer erheblichen Beanspruchung, da zum einen beispielsweise die zu bewegenden Türen relativ schwer sind und zum anderen die Betätigungsfrequenz zum Öffnen und Schließen der Tür vielfach sehr hoch ist.

Dabei kommt den verwendeten Befestigungsvorrichtungen eine besondere Bedeutung zu, da gewährleistet sein muss, dass die Verbindung des Beschlagteiles mit dem Bauteil dauerhaft ist und sich nicht nach relativ kurzer Benutzungszeit löst.

Beispielsweise aus der DE 20212296 U1 ist es bekannt, dass Beschlagteile mit Hilfe von Befestigungswinkeln am Bauteil anzuschließen sind, wobei jeder Befestigungswinkel mit dem Beschlagteil durch eine Spreizhülse in Kombination mit einem Spreizkonus verbunden ist.

Aus der DE 8711918 U1 ist eine gattungsgemäße Befestigungsvorrichtung bekannt, die eine Spreizhülse sowie einen Spreizkonus aufweist, der durch eine eingedrehte Schraube unter Aufspreizung der Spreizhülse axial verschiebbar ist, d. h. durch Einziehen in das Innere der Spreizhülse.

Probleme ergeben sich allerdings bei der Montage dieser Befestigungsvorrichtung, insbesondere jedoch bei einer Demontage, da der lose einsitzende Spreizkonus beim Lösen und Herausziehen der Schraube sehr leicht aus der Spreizhülse herausfällt, in das Innere des rohrförmigen Beschlagteiles.

Aber auch beim Eindrehen der Schraube in den Spreizkonus besteht die Gefahr, dass bei einem nicht exakt geführten Eingriff der Schraube der Spreizkonus aus der Spreizhülse herausgedrückt wird und nur mit erheblichem Aufwand wieder in eine Gebrauchsposition zu bringen ist.

Der vorliegenden Erfindung liegt daher die Aufgabe zugrunde, eine Befestigungsvorrichtung der gattungsgemäßen Art so weiter zu entwickeln, dass ihre Handhabung und Verwendungsfähigkeit verbessert wird.

Diese Aufgabe wird durch eine Befestigungsvorrichtung gelöst, die die Merkmale des Anspruches 1 aufweist.

Durch diese konstruktive Ausbildung können in bemerkenswerter Weise relativ große Innendurchmessertoleranzen des Beschlagteiles ausgeglichen werden, was bislang in diesem Umfang nicht möglich war.

Durch die große Pressfläche der Spreizhülse am Beschlagteil ergibt sich daneben eine größere Klemmwirkung, durch die das Beschlagteil wesentlich fester mit dem Bauteil verbunden ist, so dass die Belastungsfähigkeit deutlich gesteigert ist.

In Verbindung mit einer relativ großflächigen Anlage des Spreizkonus an die Anlagefläche der Spreizhülse ergibt sich eine im Funktionsfall nahezu vollumfängliche Anpressung der Spreizhülse an die Innenwandung des Beschlagteiles im Überdeckungsbereich.

Nach einer vorteilhaften Weiterbildung der Erfindung ist vorgesehen, als Längsschlitz lediglich den genannten durchgehenden Schlitz vorzusehen, während gegenüberliegend eine Innennut angeordnet ist, die sich gleichfalls über die gesamte Länge der Spreizhülse erstreckt und die bis auf eine geringe Restwandstärke zur Außenseite eingestochen ist.

Dabei fungiert diese Restwandstärke im weitesten Sinne wie ein Filmscharnier, durch dass die beiden quasi gebildeten Hälften der Spreizhülse vollflächig an den zugeordneten Bereich der Wandung des Beschlagteiles angepresst werden.

Anstelle dieser konstruktiven Weiterbildung oder zusätzlich können in an sich bekannter Weise Längsschlitze vorgesehen sein, die sich von der Einführseite des Spreizkonus her axial über eine große Strecke der Länge der Spreizhülse erstrekken, in jedem Fall aber einen an der gegenüberliegenden Seite vorgesehenen insoweit ununterbrochenen Randbereich bilden.

Ein weiterer Gedanke der Erfindung sieht vor, dass der Spreizkonus selbsthemmend in der Spreizhülse gehalten ist. Dadurch kann die Spreizhülse mit eingesetztem Spreizkonus ungleich einfacher gehandhabt werden als bisher. Ein Lösen des Spreizkonus aus der Spreizhülse ist nur unter Überwindung eines durch die Selbsthemmung bestimmten Widerstandes möglich, der im Regelfall ausreicht, den Spreizkonus in jeder Position in der Spreizhülse zu halten.

Insbesondere bei einer Demontage bzw. einem Lösen eines angeschlossenen Teiles verbleibt der Spreizkonus selbst nach Entfernen der Schraube in der Spreizhülse, so dass deren Weiterbenutzung problemlos möglich ist.

Dabei kann die Selbsthemmung des Spreizkonus dadurch erreicht werden, dass eine Steigung entsprechend flach gehalten wird, beispielsweise bei einem Steigungswinkel von ca. 8°.

Denkbar ist aber auch, die Selbsthemmung durch eine Aufrauung der Oberfläche des Spreizkonus im Anlagebereich mit der Spreizhülse und/oder dieser Anlagefläche zu erreichen.

Die Aufrauung der Oberflächen entweder des Spreizkonus und/oder der Anlagefläche der Spreizhülse kann durch die Aufbringung einer Oberflächenstruktur erfolgen, beispielsweise einer Rautierung, einer Rillung oder dergleichen, wobei im letzteren Fall die Rillen vorzugsweise axial ausgerichtet sind.

Für einen größtmöglichen Reibfluss zur Selbsthemmung ist vorgesehen, dass der Spreizkonus mit seiner Umfangsfläche vollständig an der zugeordneten Anlagefläche der Spreizhülse anliegt. Dazu ist die Länge der Anlagefläche zumindest gleich der Länge des Spreizkonus.

Weitere vorteilhafte Ausbildungen der Erfindung sind in den Unteransprüchen gekennzeichnet.

Ausführungsbeispiele der Erfindung sind nachfolgend anhand der beigefügten Zeichnungen beschrieben. Es zeigen:
- Fig. 1: eine erfindungsgemäße Befestigungsvorrichtung in montierter Stellung;
- Fig. 2: eine Sprengdarstellung der Befestigungsvorrichtung;
- Fig. 3: ein weiteres Ausführungsbeispiel eines Teiles der Befestigungsvorrichtung in einer Unteransicht;
- Fig. 4: ein weiteres Ausführungsbeispiel eines Teiles der Befestigungsvorrichtung ebenfalls in einer Unteransicht.
- Fig. 5: ein weiteres Ausführungsbeispiel einer montierten Befestigungsvorrichtung in einer teilweise geschnittenen Seitenansicht.
- Fig. 6: die Befestigungsvorrichtung nach Figur 5 in einer Draufsicht entsprechend dem Schnitt VI - VI in Figur 5.

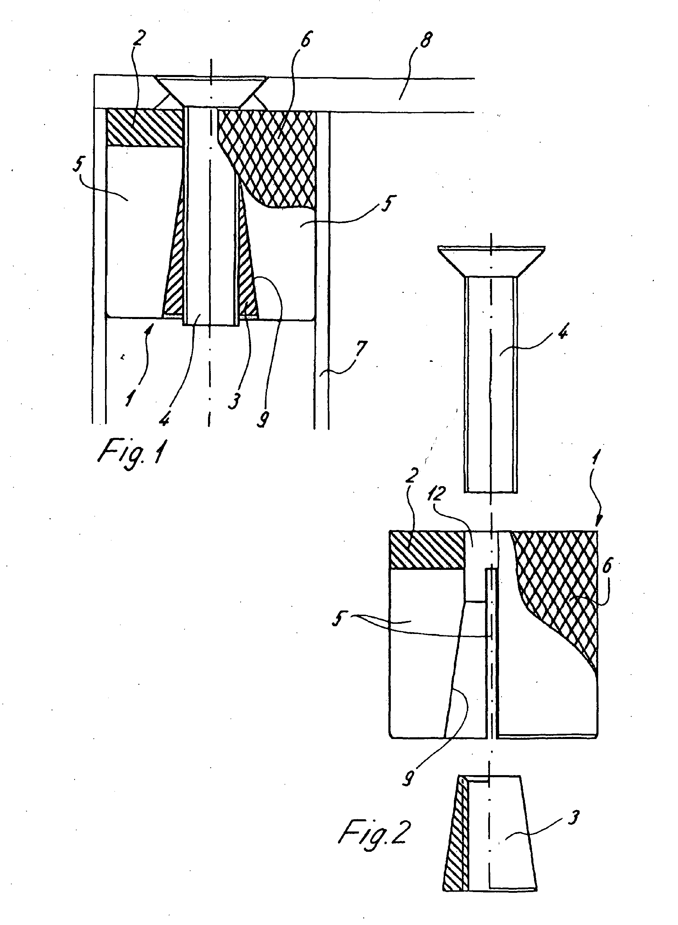

In der Fig. 1 ist eine Befestigungsvorrichtung gezeigt, durch die ein rohrförmiges Beschlagteil 7, beispielsweise eine Griffstange, mit einem Bauteil 8, im vorliegenden Ausführungsbeispiel einem Halter, fest verbunden ist.

Die Befestigungsvorrichtung besteht aus einer Spreizhülse 1, deren außenseitige Mantelfläche strukturiert in Form einer Rautierung 6 ist.

Weiter ist die Spreizhülse 1 mit axial sich erstreckenden Längsschlitzen 5 versehen, die bei dem Ausführungsbeispielen in den Fig. 1 und 2 ausgehend von der Unterseite sich über einen großen Teil der Länge der Spreizhülse 1 erstrecken, wodurch oberseitig ein Rand 2 aus Vollmaterial verbleibt.

In die Spreizhülse 1 ist von unten her ein Spreizkonus 3 eingeführt, der ein Innengewinde aufweist, in das eine Schraube 4 eingedreht ist, die durch eine Bohrung 12 der Spreizhülse 1 geführt ist und sich mit ihrem Kopf an dem Bauteil 8 abstützt.

Der Spreizkonus 3 liegt mit seiner Mantelfläche in Gebrauchsstellung vollständig an einer Anlagefläche 9 der Spreizhülse 1 an, deren Koniszität der des Spreizkonus 3 entspricht, wobei der Neigungswinkel relativ flach gehalten ist, um einen zur selbsthemmenden Anlage erforderlichen Reibschluss zu erhalten.

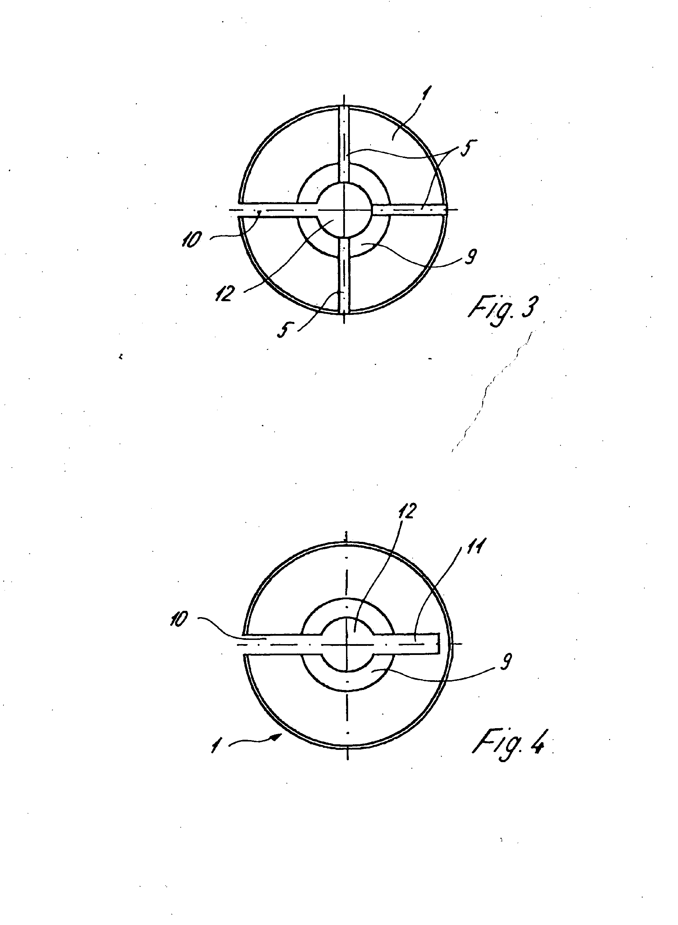

Neben den sich teilweise über die Länge der Spreizhülse 1 erstreckenden Längsschlitzen 5 ist bei dem in der Fig. 3 gezeigten Beispiel ein weiterer Längsschlitz 10 vorgesehen, der einem Längsschlitz 5 gegenüberliegt und der durchgehend ausgebildet ist, also ausgehend von der Unterseite der Spreizhülse bis zur Oberseite sowie von der Bohrung 12 zur Außenfläche.

Dadurch kann die Spreizhülse über den gesamten Längenbereich aufgespreizt und gegen die Innenwandung des Beschlagteiles gepresst werden, so dass auch größere Innendurchmessertoleranzen problemlos überbrückt werden.

Bei dem in der Fig. 3 gezeigten Ausführungsbeispiel sind die Längsschlitze 5 bzw. der Längsschlitz 10 jeweils in einem Winkel von 90° zueinander angeordnet.

Demgegenüber weist das in der Fig. 4 gezeigte Ausführungsbeispiel der Spreizhülse 1 lediglich einen Längsschlitz 10 auf, und zwar einen durchgehenden.

Um eine Aufspreizung der Spreizhülse 1 beim Einziehen des Spreizkonus 3 zu erreichen, ist dem Längsschlitz 10 gegenüberliegt in die Wandung der Spreizhülse 1 eine Innennut 11 eingebracht, ausgehend von der Bohrung 12 bzw. der Anlagefläche 9 hin zur Außenseite, jedoch unter Beibehaltung einer geringen Wandstärke, um die sich die beiden gebildeten Hälften der Spreizhülse 1 entsprechend aufbiegen können.

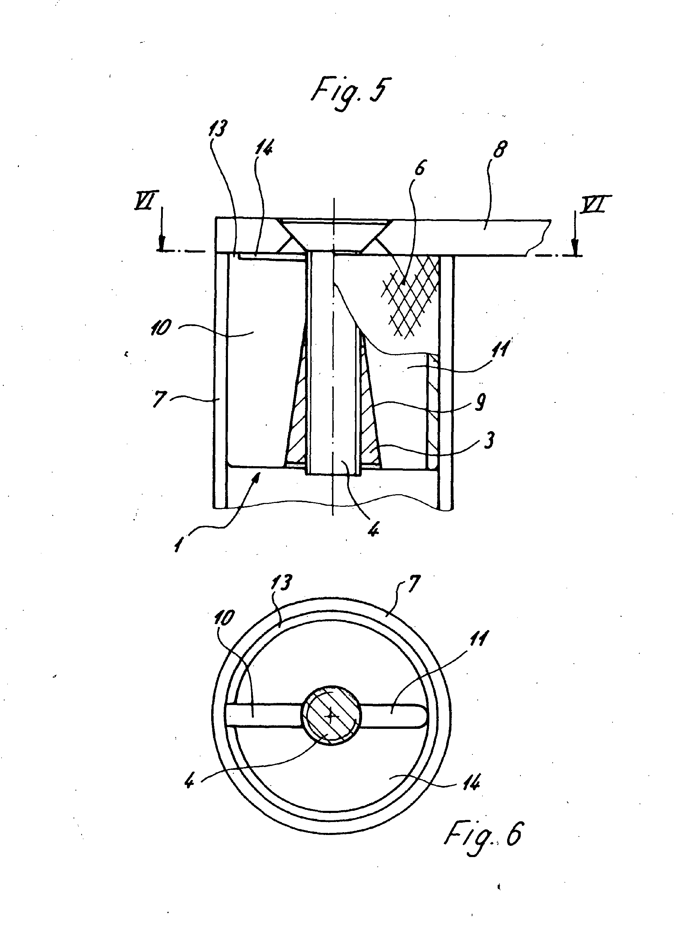

Bei dem in den Figuren 5 und 6 gezeigten Beispiel entspricht die Befestigungsvorrichtung im wesentlichen der in der Figur 4, d. h., die Spreizhülse 1 weist ebenfalls einen durchgehenden Längsschlitz 10 sowie eine gegenüberliegende Innennut 11 auf.

Auf der dem Spreizkonus 3 abgewandten Seite, also der der Anlagefläche 9 gegenüberliegenden Stirnseite, ist im Außenrandbereich ein umlaufendes Bündchen 13 vorgesehen, das den Rand für einen Ausschnitt 14 bildet und das lediglich unterbrochen wird von dem Längsschlitz 10.

Dieses in seiner Breite schmal gehaltene Bündchen 13 bildet lediglich eine kleine Anlagefläche am Bauteil 8 und dadurch eine geringere Reibfläche, wodurch eine leichtere Spreizung beim Einziehen des Spreizkonus 3 erreicht wird.

### Bezugszeichenliste

- 1: Spreizhülse
- 2: Rand
- 3: Spreizkonus
- 4: Schraube
- 5: Längsschlitz
- 6: Rautierung
- 7: Beschlagteil
- 8: Bauteil
- 9: Anlagefläche
- 10: Längsschlitz
- 11: Innennut
- 12: Bohrung
- 13: Bündchen
- 14: Ausschnitt

## Patentansprüche

1. Befestigungsvorrichtung zur Befestigung eines zumindest endseitig rohrförmigen Beschlagteiles (7), vorzugsweise eines Griffes, an einem Bauteil (8), insbesondere einer Tür oder einem Fenster mit einer in Funktionsstellung an der Innenwandung des Beschlagteiles (7) reibschlüssig anliegenden, mit mindestens einer mit einem Längsschlitz (5, 10) versehenen Spreizhülse (1), in der ein Spreizkonus (3) geführt ist, der zur Spreizung der Spreizhülse (1) mittels einer Schraube (4) in der Spreizhülse (1) axial bewegbar ist, **dadurch gekennzeichnet, dass** der zumindest eine Längsschlitz (10) sich über die gesamte Länge der Spreizhülse (1) sowie von einer Innenbohrung (12) bzw. der Anlagefläche (9) zur Außenseite hin erstreckt.

2. Befestigungsvorrichtung nach Anspruch 1, **dadurch gekennzeichnet, dass** der Spreizkonus (3) in Gebrauchsstellung vollständig an einer inneren Anlagefläche (9) der Spreizhülse (1) anliegt.

3. Befestigungsvorrichtung nach einem der vorhergehenden Ansprüche, **dadurch gekennzeichnet, dass** der Spreizkonus (3) selbsthemmend in der Spreizhülse (1) gehalten ist.

4. Befestigungsvorrichtung nach einem der vorhergehenden Ansprüche, **dadurch gekennzeichnet, dass** der Neigungswinkel des Spreizkonus (3) dem Neigungswinkel der Anlagefläche (9) entspricht.

5. Befestigungsvorrichtung nach einem der vorhergehenden Ansprüche, **dadurch gekennzeichnet, dass** der Neigungswinkel flach gehalten ist.

6. Befestigungsvorrichtung nach einem der vorhergehenden Ansprüche, **dadurch gekennzeichnet, dass** der Neigungswinkel etwa 8° beträgt, bezogen auf die Mittellängsachse.

7. Befestigungsvorrichtung nach einem der vorhergehenden Ansprüche, **dadurch gekennzeichnet, dass** die Mantelfläche des Spreizkonus (3) und/oder die Anlagefläche (9) aufgerauht sind.

8. Befestigungsvorrichtung nach einem der vorhergehenden Ansprüche, **dadurch gekennzeichnet, dass** in an sich bekannter Weise weitere Längsschlitze (5) vorgesehen sind, die sich über eine Teillänge der Spreizhülse (1) erstrecken.

9. Befestigungsvorrichtung nach einem der vorhergehenden Ansprüche, **dadurch gekennzeichnet, dass** dem durchgehenden Längsschlitz gegenüberliegend eine von der Bohrung (12) bzw. der Anlagefläche (9) ausgehende, sich über die gesamte Länge der Spreizhülse (1) erstreckende Innennut (11) vorgesehen ist, die sich zur Außenseite hin, unter Bildung einer geringen Wandstärke erstreckt.

10. Befestigungsvorrichtung nach einem der vorhergehenden Ansprüche, **dadurch gekennzeichnet, dass** die Spreizhülse (1) auf ihrer dem Spreizkonus (4) gegenüberliegenden Stirnseite mit einem am Beschlagteil (8) anpreßbaren weitgehend umlaufenden Bündchen (13) versehen ist.

11. Befestigungsvorrichtung nach einem der vorhergehenden Ansprüche, **dadurch gekennzeichnet, dass** das Bündchen (13) im äußeren Randbereich, in Fortsetzung der Mantelfläche der Spreizhülse (1) vorgesehen ist.
